# EUROPÄISCHE PATENTANMELDUNG

(11) **EP 2 196 785 A2**
(43) Veröffentlichungstag der Anmeldung: **16.06.2010**
(21) Anmeldenummer: 09015369.3
(22) Anmeldetag: 11.12.2009
(51) Int. Cl.: G01G 21/28

(54) **Waage**

(30) Priorität: 13.12.2008 DE 102008062191
(71) Anmelder: Bizerba GmbH & Co. KG, 72336 Balingen (DE)
(72) Erfinder: Merz, Roland, 72459 Albstadt (DE)
(74) Vertreter: Wagner, Jürgen

(57) **Zusammenfassung**

Die Erfindung betrifft eine Waage (1) mit einem Gehäuse (2) und einer Lastplatte (11) zum Wiegen von Wiegegut. Um die Oberfläche des Gehäuses mechanisch zu schützen und ästhetisch ansprechend zu gestalten ist vorgesehen, dass das Gehäuse an seiner Außenkontur zumindest einen Einsatz (3) aufweist, der die die Oberfläche des Gehäuses zumindest teilweise abdeckt und lösbar mit dem Gehäuse verbunden ist.

## Beschreibung

Die Erfindung betrifft eine Waage mit einem Gehäuse nach den Merkmalen des Oberbegriffs des Anspruchs 1.

In der Praxis werden Waagen oft in gewerblicher oder industrieller Umgebung aufgestellt. Dabei muss die Waage mechanischen oder chemischen Einflüssen widerstehen, die oft über eine lange Zeit hinweg auf das Gehäuse der Waage einwirken. Das führt dazu, dass die Oberfläche eines Gehäuses mit der Zeit aufgrund der äußeren Einflüsse angegriffen wird und unansehnlich werden kann.

Der Erfindung liegt die Aufgabe zugrunde eine Waage mit einem Gehäuse zu schaffen, welches eine unempfindliche Oberfläche aufweist. Zudem soll das Gehäuse der Waage ästhetisch ansprechend gestaltbar sein.

Diese Aufgabe wird erfindungsgemäß durch eine Waage mit den Merkmalen des Anspruchs 1 gelöst.

Die Waage weist ein Gehäuse mit einer geschlossenen Außenseite auf. Auf der Oberfläche des Gehäuses ist ein austauschbarer Einsatz lösbar befestigt, der die Außenseite des Gehäuses zumindest abschnittsweise abdeckt. So kann der Einsatz an besonders exponierten Stellen des Gehäuses angebracht werden und schützt die Oberfläche des Gehäuses.

Der Einsatz ist selbsthaftend und ablösbar ausgebildet, so dass er insbesondere ohne den Einsatz von einem Werkzeug auf einfache Art und Weise manuell von dem Gehäuse gelöst werden kann. Auf zusätzliche, das Design der Waage beeinträchtigende Befestigungselemente kann somit verzichtet werden. Bei einer Beeinträchtigung seines Aussehens kann der Einsatz einfach gegen einen neuen Einsatz ausgetauscht werden. Auch kann mit dem Einsatz eine ästhetisch gefällige Gestaltung des Gehäuses erzielt werden, indem der Einsatz z. B. farbig ausgestaltet wird oder eine als hochwertig empfundene Oberfläche erhält. Insbesondere kann die Oberfläche des Einsatzes ästhetisch ansprechend gestaltet werden und als Designelement oder als Werbefläche dienen.

Der Einsatz kann einschichtig aus einem Material wie z. B. einem Metall, einem Holz oder einem Kunststoff ausgebildet sein. Er kann jedoch auch einen Schichtaufbau aufweisen, indem ein Trägermaterial, z. B. ein Kunststoff mit einer Oberfläche wie z. B. Metall oder Holz versehen ist oder bedruckt wird.

Die Oberfläche des Einsatzes kann insbesondere kratzfest und/oder chemisch resistent ausgebildet sein, um eine lange Haltbarkeit zu ermöglichen. Von Vorteil ist, wenn die Oberfläche des Einsatzes ästhetisch ansprechend gestaltet werden kann, z. B. bedruckbar ist oder eine bestimmte Farbe aufweist.

In einer Ausgestaltung kann der Einsatz vorgeformt sein, so dass er an die Kontur des Gehäuses angepasst ist. In einer anderen Ausgestaltung ist vorgesehen, dass der Einsatz flexibel, insbesondere biegbar ist, so dass sich der Einsatz an die Kontur der Außenseite des Gehäuses anpasst.

Um eine gute Beständigkeit gegen mechanische oder chemische Einflüsse zu erhalten ist vorgesehen, dass die Außenseite des Gehäuses geschlossen ausgebildet ist. Die Verbindung zwischen Gehäuse und Einsatz darf daher keine Durchbrüche aufweisen, sondern soll so ausgestaltet sein, dass die geschlossene Außenseite erhalten bleibt. Daher erfolgt die Befestigung des Einsatzes durch verrasten oder verclipsen. Die Rastaufnahmen oder Clipsvorrichtungen können auf der Außenseite des Gehäuses angeordnet sein um Durchbrüche oder Öffnungen in dem Gehäuse zu vermeiden.

In einer Ausgestaltung kann die Befestigung des Einsatzes auf magnetischer Anziehung basierend erfolgen, indem z.B. der Einsatz als Dauermagnet ausgebildet ist oder dauermagnetische Eigenschaften aufweist und die Außenseite des Gehäuses zumindest abschnittsweise aus magnetisierbarem Material besteht. Ebenso kann auch der Einsatz aus einem magnetisierbaren Material bestehen oder ein solches aufweisen und die Außenseite des Gehäuses zumindest abschnittsweise als Dauermagnet ausgebildet sein oder einen Dauermagnet aufweisen.

In einer Ausgestaltung ist vorgesehen, dass der Einsatz mit der Außenseite des Gehäuses mit einem Haftkleber oder Adhäsionskleber verklebt ist. Als Kleber kann insbesondere ein wieder ablösbarer Kleber verwendet werden, vorzugsweise ein nicht aushärtender Kleber auf Acrylatbasis. Die Klebeschicht ist dabei bevorzugt auf der Rückseite des Einsatzes aufgetragen und erstreckt sich im wesentlichen über die gesamte Rückseite des Einsatzes.

Aufgrund der flächigen Außenseite des Gehäuses und des flächigen Einsatzes ist es wichtig, dass der Einsatz beim Verbinden mit dem Gehäuse nicht versehentlich schräg positioniert wird, da dieses einen unschönen optischen Eindruck vermitteln würde. Selbst geringe Abweichungen fallen dabei ins Auge. Um eine exakte Positionierung des Einsatzes zu ermöglichen, ist vorgesehen, dass das Gehäuse eine Führung zum Justieren des Einsatzes in Form einer Kante aufweist. Die Kante kann insbesondere als Anlegekante ausgebildet sein und hilft beim manuellen Justieren des Einsatzes. Bei dem Anbringen des Einsatzes am Gehäuse kann dieser an der Kante angelegt und dabei exakt ausgerichtet werden. Vor allem wenn der Einsatz relativ dünn und/oder flexibel ist, ist eine solche Justierhilfe sinnvoll.

Insbesondere wenn der Einsatz relativ dünn und/oder flexibel ausgebildet ist muss darauf geachtet werden, dass es bei dem Verbinden von Gehäuse und Einsatz nicht zu unerwünschten Lufteinschlüssen kommt. So ist in einer Ausgestaltung vorgesehen, dass die Rückseite des Einsatzes Luftkanäle aufweist, die die Luft beim Verbinden, insbesondere beim Verkleben des Einsatzes mit dem Gehäuse ableiten. Die Luftkanäle sind dabei zwischen den Klebezonen angeordnet oder in die Klebezone integriert. Die Luftkanäle sind zur verbesserten Luftableitung untereinander verbunden, es sind also kommunizierende Kanäle. Zur Ausbildung der Kanäle kann der Kleber als punktförmiges oder streifenförmiges oder rautenförmiges Muster aufgetragen sein, so dass sich zwischen den von Kleber überdeckten Flächen klebefreie Flächen oder Kanäle ausbilden, die als Luftkanal dienen. In einer Ausführung kann in die Rückseite des Einsatzes ein Muster eingeprägt sein, z. B. ein Muster mit rautenförmigen Vertiefungen, die als Luftkanäle zum Ableiten von Luft dienen.

Eine Anwendung der erfindungsgemäßen Waage kann im Industriebereich oder im Laborbereich erfolgen. Die Waage kann jedoch auch als Ladenwaage ausgebildet sein und im Einzelhandel zum Verwiegen von Lebensmittel dienen.

Weitere Ausführungsbeispiele der Erfindung sind in den Figuren dargestellt und der dazugehörenden Beschreibung beschrieben.

Es zeigen,
- Figur 1:: Schematische Ansicht einer Ladenwaage mit Display und Einsatz aus Kundenperspektive;
- Figur 2:: Perspektivische Ansicht einer Ladenwaage mit Display und Einsatz aus Bedienerperspektive;
- Figur 3:: Eine Schnittdarstellung durch die Säule der Ladenwaage;
- Figur 4:: Die Rückseite eines Einsatzes.

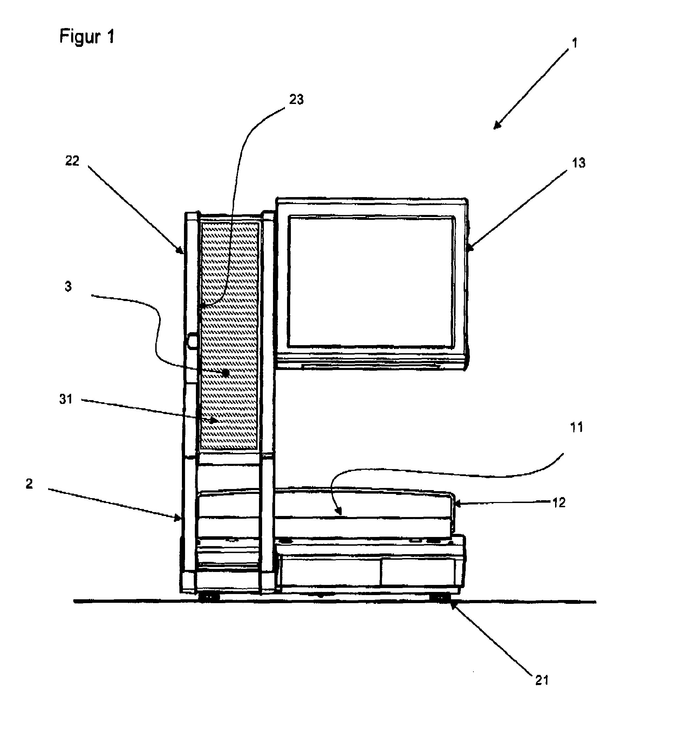

Figur 1 stellt eine Ladenwaage 1 aus der Sicht eines Kunden dar, der von einem Verkäufer an der Waage bedient wird. Dabei stehen sich der Verkäufer und der Kunde normalerweise an einer Theke gegenüber. Die Ladenwaage 1 weist ein Terminal 13 mit zwei Displays auf. Ein erstes Display ist wie in Figur 1 dargestellt, oberhalb der Lastplatte angebracht und an der Rückseite der Waage einem Kunden zugewandt ausgerichtet, um für diesen Informationen darstellen zu können. Zudem ist auf der gegenüberliegenden Seite des Terminals ein zweites Display angeordnet, um einem Bediener der Waage Informationen anzuzeigen.

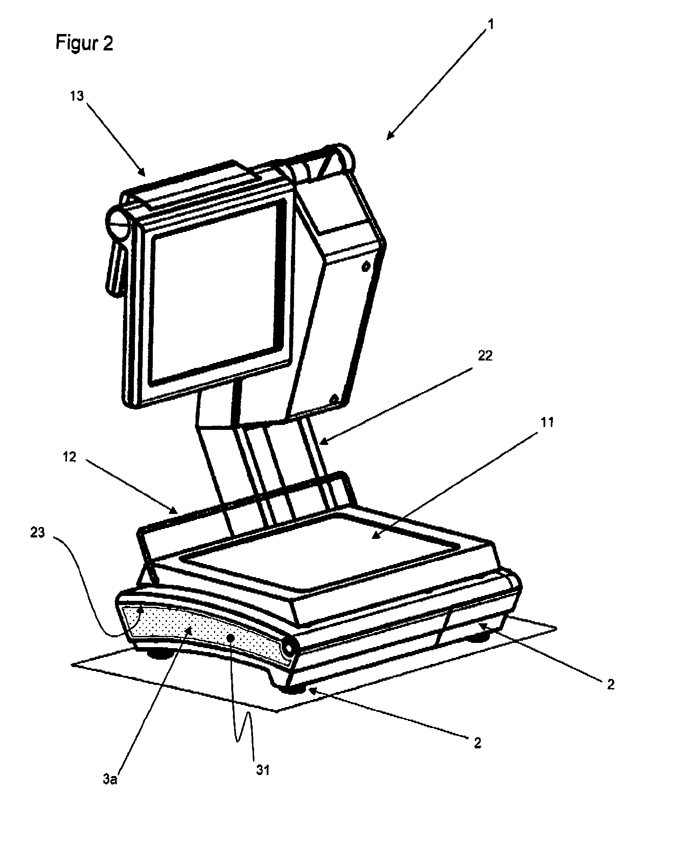

In der Figur 2 ist eine Ladenwaage 1 aus Sicht eines Bedieners gezeigt. Die Ladenwaage ist bis auf ein kleineres Kundendisplay gleich aufgebaut, wie die in Figur 1 dargestellte Waage 1, so dass die nachstehende Beschreibung sich auf beide Figuren bezieht.

Die Ladenwaage 1 weist ein Gehäuse 2 auf, welches die Komponenten der Waage 1 wie z. B. die Elektronik, einen Lastaufnehmer, einen Drucker und ein LCD-Display aufnimmt. Das Gehäuse 2 wird in seinem unteren Bereich über höhenverstellbare Gehäusefüße 21 auf einem Tisch oder einer Theke aufgestellt. Mittels der höhenverstellbaren Gehäusefüße 21 kann die Waage auch auf unebenen Flächen waagerecht positioniert werden.

Innerhalb des Gehäuses 2 ist eine Wägezelle als Lastaufnehmer angeordnet und mit der Lastplatte 11 verbunden. Auf die Lastplatte ist Wiegegut auflegbar, dessen Gewicht über die Wägezelle ermittelt und letztlich an einem Terminal 13, welches über eine Säule 22 mit dem unteren Bereich des Gehäuses verbunden ist, angezeigt. Die Säule 22 erstreckt sich an der Rückseite der Waage 1 nach oben hin und haltert das Terminal 13. Die Lastplatte 11 ist auf dem unteren Bereich des Gehäuses 2 beweglich gelagert und mit etwas Abstand zu der Säule 22 angeordnet. Im hinteren Bereich der Lastplatte 11 ist ein Bügel 12 angeordnet, der verhindert, dass das auf die Lastplatte 11 aufgelegte Wiegegut nicht nach hinten über die Lastplatte 11 übersteht. Die hintere Seite der Lastplatte 11 ist als diejenige Seite definiert, die einem Bediener der Waage abgewandt ist, wenn dieser vor der Waage steht.

Das Gehäuse 2 der Waage 1 weist eine geschlossene Außenseite auf und ist aus einem Kunststoff oder einem Metall gefertigt. An der Außenseite der Waage 1 weist diese, wie in Figur 1 dargestellt, einen austauschbaren Einsatz 3 in dem einem Kunden zugewandten Bereich der Säule 22 auf, der die Rückseite der Säule abdeckt. Die Oberfläche 31 des Einsatzes kann einfarbig oder mehrfarbig ausgeführt oder mit einem Bild versehen sein. Zudem ist in einem seitlichen Bereich des Gehäuses 2, wie in Figur 2 dargestellt, ein weiterer austauschbarer Einsatz 3a angeordnet, der einen seitlichen Bereich des Gehäuses 2 abdeckt.

Die Einsätze 3 oder 3a schützen die Oberfläche des Gehäuses 2 und bilden zugleich ein Designelement. Sie können ästhetisch ansprechend gestaltet werden, indem z. B. die Oberflächen des Einsatzes 3 oder 3a bedruckt oder farbig gestaltet werden oder eine Schmuckoberfläche aus einem Material wie z. B. Holz oder Edelstahl aufweisen. Wann durch langen Gebrauch und/oder raue Umgebungsbedingungen die Einsätze 3 bzw. 3a abgenutzt sind, können diese einfach gegen neue Einsätze getauscht werden, so dass der Gesamteindruck des Gehäuses dann wieder einen neuwertigen Eindruck macht.

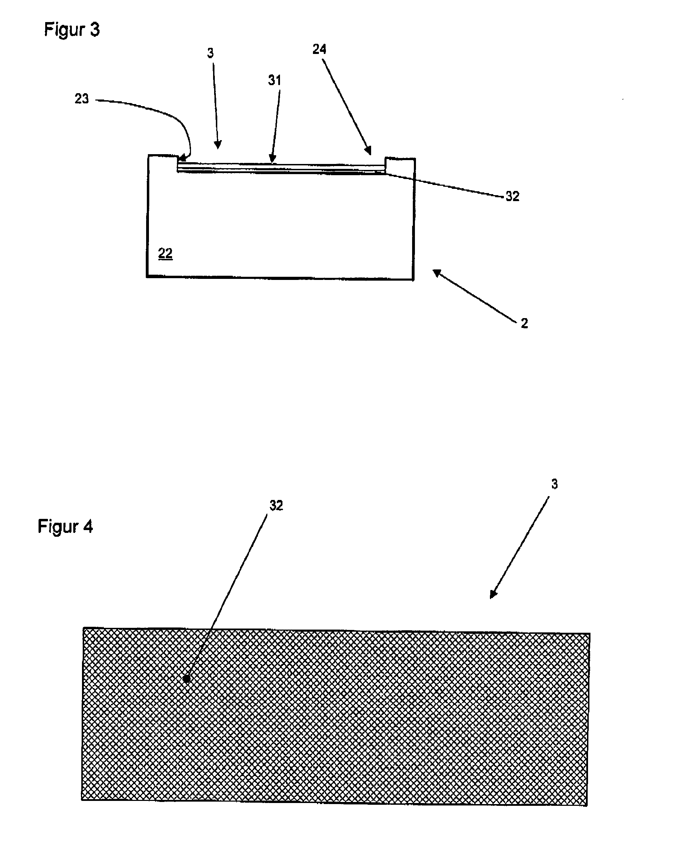

In der Figur 3 ist ein Schnitt durch die Säule 22 und den Einsatz 3 dargestellt. Das Gehäuse 2 weist im Bereich des Einsatzes 3 eine Vertiefung 24 auf, die auf die Abmessungen des Einsatzes 3 abgestimmt ist und diesen aufnimmt. Am Rande der Vertiefung ist eine Justierhilfe in Form einer Kante 23 angeordnet. Zum Einlegen des Einsatzes 3 wird dieser entlang seiner einen Seite an die Kante 23 angelegt und dadurch exakt parallel zu der Säule ausgerichtet. Anschließend wird der Einsatz 3 in der Vertiefung 24 über einen wieder ablösbaren Adhäsionskleber befestigt. Der Adhäsionskleber ist auf der Rückseite des Einsatzes 3 oder 3a als Klebeschicht 32 aufgebracht, so dass ein zusätzliches Hantieren mit Klebstoff entfällt. Der in der Figur 2 dargestellte Einsatz 3a ist an der Seite des Gehäuses 2 auf gleiche Art und Weise in einer mit einer als Justierhilfe dienenden Kante versehenen Aufnahme angeordnet, so dass die beispielhafte Beschreibung anhand Einsatz 3 und den Figuren 3 und 4 auch auf den Einsatz 3a zutrifft.

Die Dicke des Einsatzes 3 kann so bemessen sein, dass die Dicke genau mit der Höhe der Vertiefung übereinstimmt, so dass der befestigte Einsatz mit dem Gehäuse fluchtet. Es können auch Einsätze unterschiedlicher Dicke befestigt werden, wobei auch dünne und dadurch flexibel ausgebildete Einsätze, wie z. B. Folien einfach innerhalb der Aufnahme 24 positioniert werden können. Solche dünnen Einsätze haben den Vorteil, dass sie sich an die Kontur des Gehäuses 2 anpassen und nicht vorgeformt werden müssen.

Ein Problem bei der Verklebung der Einsätze 3 oder 3a können unerwünschte Lufteinschlüsse in der Kleberschicht darstellen. Um Lufteinschlüsse zu verhindern wird die Kleberschicht 32, wie in Figur 4 dargestellt, auf der Rückseite des Einsatzes 3 in Form eines rautenförmigen Musters aufgebracht. Zwischen den einzelnen Klebeflächen sind kleberfreie Bereiche zum Ableiten von Luft angeordnet. Diese kleberfreien Stellen sind miteinander verbunden und erstrecken sich über die gesamte rückseitige Fläche des Einsatzes 3 bzw. 3a. Sollte sich beim Klebevorgang zwischen der Außenwand des Gehäuses 2 und der Rückseite des Einsatzes Lufteinschlüsse bilden, so wird die Luft entlang der klebstofffreien Bereiche, die als Luftkanäle wirken, abgeleitet.

## Patentansprüche

1. Waage mit einem in einem Gehäuse (2) aufgenommenen Lastaufnehmer, der mit einer Lastplatte (11) zum Wiegen von Wiegegut verbunden ist,
**dadurch gekennzeichnet,**
**dass** das Gehäuse (2) eine geschlossene Außenseite aufweist, auf deren Oberfläche ein austauschbarer Einsatz (3) lösbar befestigt ist, der die Außenseite des Gehäuses (2) zumindest abschnittsweise abdeckt und selbsthaftend ausgebildet ist.

2. Waage nach Anspruch 1,
**dadurch gekennzeichnet,**
**dass** das Gehäuse (2) eine Führung (23) zum Justieren des austauschbaren Einsatzes in Form einer Kante, vorzugsweise eine Anlegekante aufweist.

3. Waage nach Anspruch 1 oder 2,
**dadurch gekennzeichnet,**
**dass** der Einsatz (3) flexibel ist und sich der Kontur der Außenseite des Gehäuses (2) anpasst.

4. Vorrichtung nach einem der Ansprüche 1 bis 7,
**dadurch gekennzeichnet,**
**dass** der Einsatz (3) eine kratzfeste und/oder bedruckbare Oberfläche aufweist.

5. Vorrichtung nach einem der Ansprüche 1 bis 4,
**dadurch gekennzeichnet,**
**dass** das Gehäuse (2) eine Vertiefung (24) aufweist, die auf die Abmessungen des Einsatzes (3) abgestimmt ist und diesen darin aufnimmt.

6. Waage einem der Ansprüche 1 bis 5,
**dadurch gekennzeichnet,**
**dass** der Einsatz (3) mit der Außenseite des Gehäuses (2) magnetisch selbsthaftend verbunden ist, vorzugsweise indem der Einsatz als Magnetfolie und das Gehäuse aus magnetisch leitendem Material ist oder indem der Einsatz als magnetisch leitende Folie und das Gehäuse magnetisch ist oder einen Magnet aufweist.

7. Waage einem der Ansprüche 1 bis 5,
**dadurch gekennzeichnet,**
**dass** der Einsatz (3) selbstklebend ausgebildet und mit der Außenseite des Gehäuses (2) lösbar verklebt ist, vorzugsweise indem der Einsatz (3) auf seiner Rückseite mit einer lösbaren Klebeschicht (32) versehen ist.

8. Waage nach Anspruch 7,
**dadurch gekennzeichnet,**
**dass** die lösbare Klebeschicht (32) einen Adhäsionskleber, vorzugsweise auf Acrylatbasis aufweist, der punktförmig oder streifenförmig auf der Rückseite des Einsatzes (3) aufgetragen ist, so dass zwischen den Klebeflächen miteinander kommunizierende und kleberfreie Kanäle zum Ableiten von Luft verbleiben.

9. Waage nach Anspruch 7 oder 8,
**dadurch gekennzeichnet,**
**dass** der Einsatz (3) auf seiner Rückseite eine eingeprägte Struktur aufweist, die miteinander kommunizierende Kanäle zum Ableiten von Luft ausbildet.

10. Waage nach einem der Ansprüche 7 bis 9,
**dadurch gekennzeichnet,**
**dass** die lösbare Klebeschicht (32) auf der Rückseite des Einsatzes (3) angeordnet ist und sich im wesentlichen über dessen gesamte Rückseite erstreckt.

11. Waage nach einem der vorhergehenden Ansprüche,
**dadurch gekennzeichnet,**
**dass** die Waage ein oberhalb der Lastplatte (11) angeordnetes Display (13) zum Anzeigen von Wiegedaten aufweist und das Gehäuse (2) einen Tragarm (22) zum Halten des Displays aufweist, wobei der Tragarm (22) eine im wesentlichen vertikal verlaufende Fläche aufweist, die von dem Einsatz (3) abgedeckt ist.
